Europäisches Patentamt

(19) European Patent Office

Office européen des brevets

(11) Publication number : **0 269 432 B2**

(12) **NEW EUROPEAN PATENT SPECIFICATION**

(45) Date of publication of the new patent
specification : 07.09.94 Bulletin 94/36

(51) Int. Cl.⁵ : **G01N 23/12**

(21) Application number : 87310400.4

(22) Date of filing : 25.11.87

(54) **Analyzer for fluid within piping.**

(30) Priority : 25.11.86 JP 280554/86
21.04.87 JP 96378/87

(43) Date of publication of application :
01.06.88 Bulletin 88/22

(45) Publication of the grant of the patent :
15.01.92 Bulletin 92/03

(45) Mention of the opposition decision :
07.09.94 Bulletin 94/36

(84) Designated Contracting States :
DE FR GB

(56) References cited :
CH-A- 485 216
US-A- 3 254 212
E.Z. THE RADIO AND ELECTRONIC ENGINEER, vol. 26, no. 4, October 1963, pages
298-304; T.B. ROWLEY: "Determination of sul-
phur content of hydrocarbons by Brems-
strahlung absorption measurement"
Two-phase flow measurement: principles, de-
signs and applications, Instrument Society of
America, 1979, chapter 9, pages 466-470
Marks' Standard Handbook for Mechanical
Engineers, McCraw-Hill, 1978, pages 8-143,
144, 145
Encyclopedia of Chemical Processing and De-
sign, Marcel Dekker Inc., 1977, pages 309-325

(73) Proprietor : **Petro-Canada**
**250-6th Avenue S.W.**
**Calgary Alberta T2P 3E3 (CA)**
Proprietor : **MITSUBISHI DENKI KABUSHIKI**
**KAISHA**
**2-3, Marunouchi 2-chome**
**Chiyoda-ku**
**Tokyo 100 (JP)**

(72) Inventor : **Exall, Doug I. Production**
**Technology Services Lab.**
**Techn. Services**
**Petro-Canada Inc.**
**Exploration Lab.**
**40 Research Place NW Calgary Alberta (CA)**

Inventor : **Martin, Wallace W. Production**
**Techn. Services Lab.**
**Techn. Services**
**Petro-Canada Inc.**
**Exploration Lab.**
**40 Research Place NW Calgary Alberta (CA)**
Inventor : **Komaru, Masaki c/o Chuo**
**Kenkyusho**
**Mitsubishi Denki KK**
**1-1 Tsukaguchi Hon-machi 8-ch.**
**Amagasaki City Hyogo Prefecture (JP)**
Inventor : **Badono, Shinji c/o Chuo Kenkyusho**
**Mitsubishi Denki KK**
**1-1 Tsukaguchi Hon-machi 8-ch.**
**Amagasaki City Hyogo Prefecture (JP)**
Inventor : **Tomoda, Toshimasa c/o Chuo**
**Kenkyusho**
**Mitsubishi Denki KK**
**1-1 Tsukaguchi Hon-machi 8-ch.**
**Amagasaki City Hyogo Prefecture (JP)**
Inventor : **Nakata Syozo c/o Seisangijutsu**
**Kenkyusho**
**Mitsubishi Denki KK**
**1-1 Tsukaguchi Hon-machi 8-ch.**
**Amagasaki City Hyogo Prefecture (JP)**
Inventor : **Hisamori, Yoichi c/o Seisangijutsu**
**Kenkyusho**
**Mitsubishi Denki KK**
**1-1 Tsukaguchi Hon-machi 8-ch.**
**Amagasaki City Hyogo Prefecture (JP)**
Inventor : **Maruyama, Tadayoshi c/o Kobe**
**Seisakusho**
**Mitsubishi Denki K.K.**
**1-2, Wadasaki-cho 1-chome**
**Hyogo-ku Kobe City Hyogo Prefecture (JP)**
Inventor : **Tsumagari, Kazuyuki c/o Kobe**
**Seisakusho**
**Mitsubishi Denki K.K.**
**1-2, Wadasaki-cho 1-chome**
**Hyogo-ku Kobe City Hyogo Prefecture (JP)**
Inventor : **Katsura, Yoshihiro c/o Kobe**
**Seisakusho**
**Mitsubishi Denki K.K.**
**1-2, Wadasaki-cho 1-chome**
**Hyogo-ku Kobe City Hyogo Prefecture (JP)**

(74) Representative : **Hackett, Sean James et al**
**MARKS & CLERK,**
**57-60 Lincoln's Inn Fields**
**London WC2A 3LS (GB)**

EP 0 269 432 B2

## Description

BACKGROUND OF THE INVENTION

This invention relates to an analyzer for fluid flowing through piping, and in particular but not exclusively, it relates to an analyzer which employs radiation to analyze the components of the fluid output of an oil well as it flows within piping.

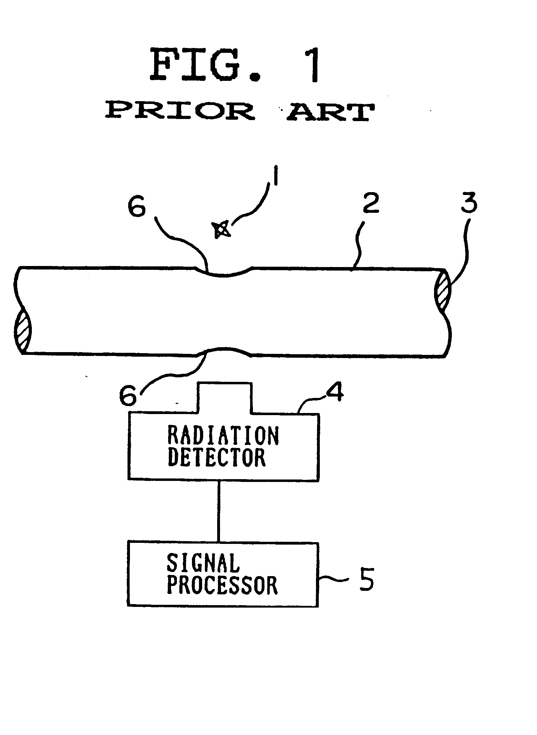

Figure 1 is a schematic diagram showing a conventional radiation analyzer for fluid within a pipe. In the figure element number 1 is a source of radiation such as X-rays or gamma rays, element number 2 is a pipe which is disposed below the radiation source 1, element number 3 is a fluid to be analyzed which is flowing through the pipe 2, element number 4 is a radiation detector which detects the radiation which is transmitted through the fluid 3 from the radiation source 1, element number 5 is a signal processing and calculating device which processes the signals from the radiation detector 4 and produces an output signal corresponding to some physical quantity of the fluid 3, and element number 6 is a dome-shaped radiation transmission window which forms a part of the pipe 2 and is made of a material which easily transmits radiation. The radiation transmission window 6 is joined to the pipe 2 by brazing in a manner such that the fluid 3 flowing through the pipe 2 can not leak out.

There are various type of analyzers which perform analysis by measuring the amount of radiation which penetrates a substance, but here the operation of an analyzer for determining the proportion of the components in a two-component substance will be described.

In general, the attenuation of radiation such as X-rays or gamma rays in a substance is expressed by the following equation.

$$I = I_o \exp(-\mu \rho t_o) \quad (1)$$

wherein Io is the intensity of the incident radiation, $\mu$ is the mass absorption coefficient with respect to radiation of the substance being measured, $\rho$ is the specific gravity of the substance, $t_o$ is the thickness of the substance through which the radiation passes, and I is the intensity of the radiation after passing through the thickness $t_o$.

When the fluid 3 of Figure 1 comprises a first substance and a second substance and the specific gravities of the two substances are respectively $\rho_1$ and $\rho_2$, the mass absorption coefficients with respect to the radiation are respectively $\mu_1$ and $\mu_2$, the component proportions are respectively k1 and k2, the wall thickness of the pipe 2 is d, its specific gravity is $\rho_w$, its mass absorption coefficient is $\mu_w$, and the length of the path of radiation passing through the fluid 3 is t, then the following relationships hold.

$$k_1 + k_2 = 1 \quad (2)$$

$$t(k_1\mu_1\rho_1 + k_2\mu_2\rho_2) = \ln(I_o/I) - 2d\rho_w\mu_w \quad (3)$$

t, d, $\rho_w$, $\rho_1$, $\rho_2$, $\mu_w$, $\mu_1$, and $\mu_2$ are known in advance, and the incident radiation intensity $I_o$ can be measured in advance. Therefore, when the proportions of the two components are not known, if the intensity I of radiation passing through the substance is measured, the values of k1 and k2 can be found from Equations (2) and (3), and the proportion of the components can be found. The intensity of the radiation after it passes through the fluid 3 can be measured by the radiation detector 4, and the values of k1 and k2 can be determined by the signal processing and calculating device 5 on the basis of Equations (2) and (3).

When the two components of the fluid 3 being measured are substances like water or oil which comprise light elements such as C, H, and O, in order for there to be a significant difference between the radiation absorption coefficients $\mu_1$ and $\mu_2$ of the two components, it is necessary to use radiation having a low photon energy. For example, it is necessary to use radiation with a photon energy of at most 60 keV. Furthermore, it is desirable that the absorption of radiation by the radiation transmission window 6 be small, and the radiation absorption coefficient of the window 6 with respect to the radiation being employed must be small. Usually, a thin sheet of beryllium, which has a low atomic number, is used as the radiation transmission window 6. The pipe 2 itself is commonly made of iron or steel, and since it is difficult to weld beryllium to these substances, the window 6 is usually secured to the pipe 2 by brazing.

The advantages of employing beryllium as a material for the radiation transmission window 6 are made clear by the following table, which shows the attenuation of radiation having an energy of 60 keV after passing through various thicknesses of iron or beryllium.

| Attenuation of Radiation (60 keV) | | | | | |
|---|---|---|---|---|---|
| Thickness of Material (cm) | 0.3 | 0.5 | 1.0 | 1.5 | 2.0 |
| Iron | 0.059 | $9.1 \times 10^{-3}$ | $8.2 \times 10^{-5}$ | $7.5 \times 10^{-7}$ | $6.7 \times 10^{-9}$ |
| Beryllium | 0.92 | 0.87 | 0.76 | 0.67 | 0.58 |

In a conventional radiation analyzer of the type described above, when the pipe 2 carries fluids which are discharged from an oil well, the fluid pressure can reach 100 - 300 kg per square cm. The radiation transmission window 6 and the joint between the window 6 and the pipe 2 must be able to withstand this pressure. The pressure resistance of the radiation transmission window 6 can be Increased by increasing its thickness, but there then arises that problem that it is Impossible to obtain a reliable joint between a thick beryllium window 6 and an iron or steel pipe 2, even if brazing is employed. E.Z THE RADIO AND ELECTRONIC ENGINEER, vol 26, no 4, October 1986, pages 298-304 describes a similar analyser to Fig 1 in which the transmission windows are discs of beryllium.

Furthermore, as beryllium is not a hard material, if foreign objects such as sand are present in the fluid within the pipe 2, a window 6 made of beryllium will undergo wear. Such wear affects the absorption of radiation by the window 6 and introduces errors into the measurements. In addition, over time, this wear can form holes in the window 6, resultina in fluid leaks.

A similar analyser as to that defined in the preamble of claim 1 and claim 2 is disclosed in "Two-phase flow measurement: principles, designs and applications", Instrument Soc. of America, 1979, Chapter 9

SUMMARY OF THE INVENTION

Accordingly, it is an object of the present invention to provide an analyzer for a fluid within a pipe which has a radiation transmission window with high resistance to pressure.

It is another object of the present invention to provide an analyzer for a fluid within a pipe which has a radiation transmission window which can be easily installed on a pipe.

It is yet another object of the present invention to provide an analyzer for a fluid within a pipe which has a radiation transmission window which is not subject to wear from particles within the fluid being analyzed.

The invention is as defined in claims 1 and 2.

An analyzer for fluids in accordance with the present invention has a tubular radiation transmission window which is coaxially disposed between two sections of the pipe which carries the fluid to be analyzed. The radiation transmission window comprises a beryllium tube and a tubular guard which fits tightly around the beryllium tube and has a higher stiffness than the beryllium. tube The tubular guard has two diametrically-opposed through holes formed therein through which radiation can pass. A radiation source is disposed on one side of the pipe so that the radiation generated thereby will enter the fluid via one of the through holes and exit through the other through hold. A radiation detector is disposed on the other side of the pipe and measures the intensity of the radiation which exists from the radiation transmission window. A signal processing and calculating device processes the signals from the radiation detector and produces an output signal corresponding to the physical property of the fluid being analyzed. The tubular guard resists the pressure of the fluid within the pipe so that the stresses within the beryllium tube are low, and the beryllium tube need be only thick enough to resist the pressure in the vicinity of the through holes.

In a preferred embodiment, the pipe sections have flanges formed on the ends thereof, and the tubular guard has corresponding flanges formed on its ends which abut against and are secured to the flanges of the pipe sections by bolts. A leakproof joint is formed between the radiation transmission window and the pipe sections by means of O-rings which are disposed between the end surfaces of the beryllium tube and the end surfaces of the pipe sections.

In order to protect the beryllium tube from wear due to abrasive materials in the fluid being analyzed, the radiation transmission window may be further equipped with a ceramic coating which is formed on the inner surface of the beryllium tube. In order to minimize the effect of the ceramic coating on the transmission of radiation through the window, the ceramic coating is preferably made of a substance comprising light atoms such as alumina, silicon carbide, MgO, silicon dioxide, and diamond.

In a preferred embodiment, a source of gamma rays or X-rays is employed as a radiation source, but various other forms of radiation may also be used.

BRIEF DESCRIPTION OF THE DRAWINGS

Figure 1 is a schematic illustration of a conventional analyzer for fluid within a pipe.

Figure 2 is a longitudinal cross-sectional view of a first embodiment of an analyzer in accordance with the present invention.

Figure 3 is a longitudinal cross-sectional view of a second embodiment of the present invention.

Figure 4 is a graph of the relationship between the transmission of light and the thickness of a coating of various materials.

In the drawings, the same reference numerals indicate the same or corresponding parts.

DESCRIPTION OF THE PREFERRED EMBODIMENTS

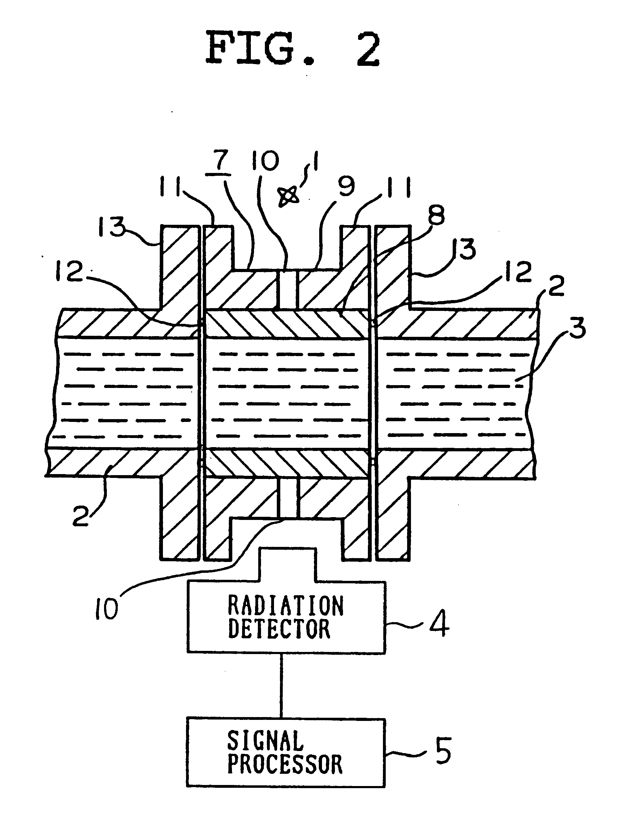

Hereinbelow, a number of preferred embodiments of an analyzer in accordance with the present invention will be described while referring to the accompanying drawings, Figure 2 of which is a cross-sectional view of a first embodiment. In this embodiment, a pipe 2 which carries a fluid 3 to be analyzed is divided into two coaxial sections which are separated by a radiation transmission window 7 which is coaxially disposed therebetween. The radiation transmission window 7 comprises a beryllium tube 8 and a tubular guard 9 which is made of steel and which fits tightly around the beryllium tube 8. Two diametrically-opposed through holes 10 are formed in the guard 9 at approximately its center, the inner ends of the through holes 10 opening onto the outer surface of the beryllium tube 8. Two flanges 11 are formed on opposite ends of the guard 9. These flanges 11 confront corresponding flanges 13 formed on the ends of two coaxial sections of the pipe 2. Two O-rings 12 are disposed between the end surfaces of the beryllium tube 8 and the flanges 13. The flanges 11 of the guard 9 are secured to the corresponding flanges 13 of the pipe section by unillustrated bolts.

When component analysis is performed using the illustrated embodiment, the radiation which passes through the fluid 3 being analyzed is detected by the radiation detector 4, and the signal processing and calculating device 5 processes the signals from the radiation detector 4 and calculates the proportions of the components of the fluid 3 in the same manner as for the conventional apparatus of Figure 1.

As the beryllium tube 8 is constrained from the outside by the tubular guard 9, the pressure of the fluid 3 acting on the beryllium tube 8 is withstood by the guard 9. Therefore, even when the fluid pressure within the pipe 2 is high, only a very small stress is induced in the beryllium tube 8. The thickness of the beryllium tube 8 need only be large enough for the beryllium tube 8 to withstand the stresses in the vicinity of the through holes 10 in the tubular guard 9. The necessary thickness of the beryllium tube 8 is therefore roughly the same as the necessary thickness of the beryllium window 6 of the conventional apparatus of Figure 1. Therefore, the attentuation of radiation passing through the beryllium tube 8 is almost the same as that for the beryllium window 6 of Figure 1. By using this radiation transmission window 7, a high-pressure fluid 3 can be measured. Furthermore, the radiation transmission window 7 of the present invention can be mounted on a pipe 2 far more easily than a conventional radiation transmission window 6 which must be connected by brazing, particularly when the beryllium tube 8 is thick. In addition, as the radiation transmission window 7 has a simple shape, it is highly reliable and has good pressure resistance.

The present inventors manufactured a radiation transmission window 7 like that illustrated in Figure 2 with a beryllium tube 8 having an outer diameter of 7cm, an inner diameter of 5cm, and a length of 10cm. The radius of the through holes 10 was 2.5cm. A pressure of 700 kg per square cm was then applied to the inside of the window 7. There was no leakage or damage of any kind.

In the above-described embodiment, the tubular guard 9 is made of steel, but it can be made of iron or other material to provide a higher stiffness than the beryllium tube. Furthermore, the lengths of the beryllium tube 8 and the tubular guard 9 are shown as being the same, but it is also possible for the beryllium tube 8 to be shorter than the tubular guard 9 and for the O-rings 12 to be disposed inside the ends of the tubular guard 9.

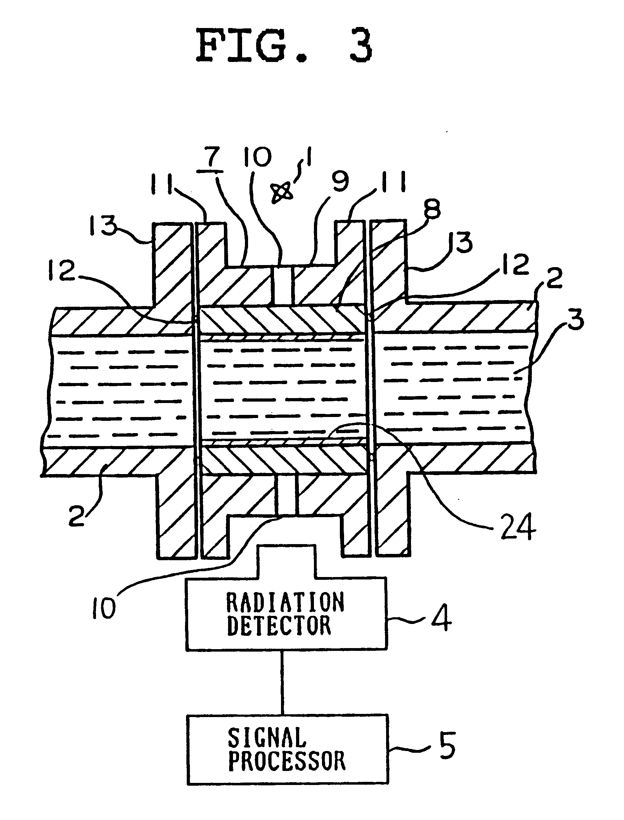

Figure 3 is a cross-sectional view of a second embodiment of an analyzer in accordance with the present invention. This embodiment differs from the first embodiment in that it further comprises a thin alumina ceramic coating 24 which is applied to the inner surface of a beryllium tube 8. The beryllium tube 8 is 2cm thick, while the alumina ceramic coating 24 is 100 microns thick. The coating 24 can be applied to the beryllium tube 8 by plasma spray coating or by vacuum deposition to obtain a uniform, dense coating. An alumina ceramic coating with a thickness of 100 microns produces only 10% attenuation of X-rays with an energy of 20 keV, so the intensity of the radiation which enters the radiation detector 4 is fully adequate for measurement purposes. As alumina is very hard, the coating 24 protects the beryllium tube 8 from wear, and the wear resistance of the radiation transmission window 7 is greatly increased. The structure and operation of this embodiment are otherwise the same as for the embodiment of Figure 2.

To illustrate the effects of an alumina ceramic coating 24, the present inventors performed a wear resistance test. 5% by volume of sand having a particle diameter of 1mm was mixed with oil, and the mixture was sprayed at an angle of 65° at a speed of 1.9 meters per second for 700 hours against a beryllium plate which was coated with an alumina ceramic having a thickness of 100 microns. After the spraying, the coating was inspected for damage. No change of any kind was observed in the coating.

In this embodiment, the thickness of the alumina ceramic coating 24 is 100 microns, but the thickness can be varied in accordance with the circumstances of use. The wear resistance of the coating can be increased by increasing its thickness, while the transmission of radiation by the coating can be increased by decreasing its thickness.

Various other substances besides an alumina ceramic can be used to form a protective coating on the inner surface of a beryllium tube. Silicon carbide, MgO, SiO2, and other ceramics which are made of light elements are suitable.

A diamond coating can also be employed. Such a coating can be applied by plasma chemical vapor deposition. A diamond coating not only provides protection against wear but also has excellent corrosion resistance.

If a ceramic such as zirconia ($ZrO_2$) which comprises heavy elements is used to form a ceramic coating, the transmission of radiation by the coating decreases. Therefore, it is preferable to employ a ceramic which is composed of light elements.

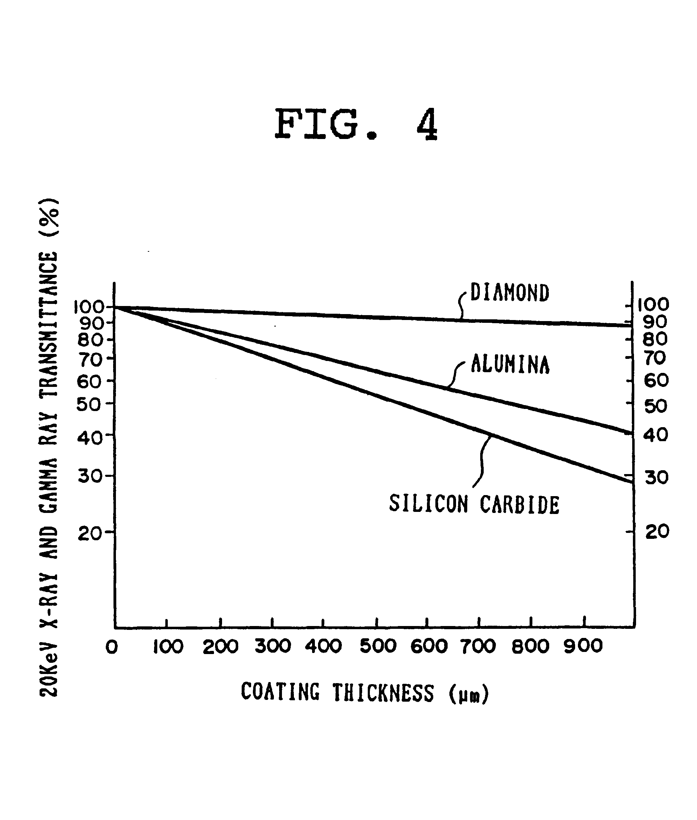

Figure 4 is a graph of the transmission of three types of ceramic coatings with respect to 20 keV X-rays or gamma rays as a function of coating thickness. From this graph, it can be seen that a diamond coating absorbs substantially no X-rays or gamma rays even if its thickness reaches 1 mm. Furthermore, a silicon carbide film has acceptable transmission even up to a coating thickness of 100 microns.

In both of the above embodiments, an analyzer was in the form of a component analyzer for analyzing two components of a fluid. However, the apparatus of the present invention can be employed as various other types of measuring devices, such as a device for measuring the density of a fluid or the amount of impurities in a fluid. Furthermore, instead of employing transmitted radiation, it is possible for the present invention to employ backscattered radiation or excited X-rays.

## Claims

1. An analyzer for analyzing a fluid within a pipe (2) using radiation, comprising:

   a radiation transmission window (7) which is coaxially disposed between two sections of said pipe, said radiation transmission window comprising a beryllium tube (8) which is coaxially with respect to said pipe sections, and a tubular guard (9) which fits tightly around said beryllium tube and has a greater stiffness than the beryllium tube said tubular guard having two diametrically-opposed through holes (10) formed therein which extend from the outer surface of said beryllium tube to the outer surface of said tubular guard;

   radiating means (1) for producing radiation which enters said pipe through one of said through holes, passes through said fluid, and exits through the other of said through holes;

   radiation detecting means (4) for detecting the intensity of the radiation from said radiating means which exits from said other of said through holes and producing a corresponding output signal; and

   processing means (5) for processing the output signal of said radiation detecting means and producing an output signal corresponding to a physical property of said fluid;

   characterised by:

   each of said pipe sections (2) having a flange (13) formed on the end thereof which adjoins said radiation transmission window; and

   said tubular guard (9) having a flange (11) formed on each end thereof, each of the flanges of said tubular guard abutting in a planar face-to-face manner and being connected to the flange of the adjoining pipe section.

2. An analyzer for analyzing a fluid within a pipe (2) using radiation, comprising:

   a radiation transmission window (7) which is coaxially disposed between two sections of said pipe, said radiation transmission window comprising a beryllium tube (8) which is coaxially with respect to said pipe sections, and a tubular guard (9) which fits tightly around said beryllium tube and has greater stiffness than the beryllium tube, said tubular guard having two diametrically-opposed through holes (10) formed therein which extend from the outer surface of said beryllium tube to the outer surface of said tubular guard;

radiating means (1) for producing radiation which enters said pipe through one of said through holes, passes through said fluid, and exits through the other of said through holes;

radiation detecting means (4) for detecting the intensity of the radiation from said radiating means which exits from said other of said through holes and producing a corresponding output signal; and

processing means (5) for processing the output signal of said radiation detecting means and producing an output signal corresponding to a physical property of said fluid;

characterised by:

sealing means (12) for forming a leakproof joint between said radiation transmission window and said pipe sections, said sealing means (12) comprising two O-rings (12), each of which is disposed between one of the end surfaces of said beryllium tube and the end surface of the adjoining pipe section.

3. An analyser as claimed in claim 2, wherein said beryllium tube is shorter than said tubular guard, both ends of said beryllium tube lie inside the ends of said tubular guard, and said O-rings are disposed inside the ends of said tubular guard between the ends of said beryllium tube and the ends of the adjoining pipe sections.

4. An analyzer as claimed in claim 1, claim 2 or claim 3 wherein

a coating (24) of a substance selected from a ceramic and diamond is formed on the inner surface of said beryllium tube.

5. An analyzer as claimed in any one of the preceding claims, wherein said tubular guard (9) is made of a material selected from iron and steel.

6. An analyzer as claimed in claim 4, wherein said ceramic is a substance comprising light atoms.

7. An analyzer as claimed in claim 6, wherein said ceramic is selected from alumina, silicon carbide, MgO and silicon dioxide.

8. An analyzer as claimed in any one of the preceeding claims, wherein said radiating means is a source of gamma rays.

9. An analyzer as claimed in any one of claims 1 to 7, wherein said radiating means is a source of X-rays.

**Patentansprüche**

1. Analysiervorrichtung zum Analysieren eines Fluides innerhalb eines Rohres (2) unter Verwendung von Strahlung, umfassend

- ein Strahlungsdurchgangsfenster (7), das koaxial zwischen zwei Abschnitten des Rohres angeordnet ist, wobei das Strahlungsdurchgangsfenster ein Berylliumrohr (8), das koaxial bezüglich der Rohrabschnitte angeordnet ist, und ein rohrförmiges Schutzteil (9) aufweist, das eng um das Berylliumrohr paßt und eine größere Steifigkeit als das Berylliumrohr hat, wobei das Schutzteil zwei diametral gegenüberliegende Durchgangslöcher (10) besitzt, die sich von der Außenoberfläche des Berylliumrohres zu der Außenoberfläche des rohrförmigen Schutzteiles erstrecken;

- eine Strahlungseinrichtung (1) zum Erzeugen von Strahlung, die durch das eine der Durchgangslöcher in das Rohr eintritt, durch das Fluid hindurchgeht und durch das andere der Durchgangslöcher austritt;

- eine Strahlungsmeßeinrichtung (4) zum Messen der Intensität der Strahlung aus der Strahlungseinrichtung, die aus dem anderen der Durchgangslöcher austritt, und zum Erzeugen eines entsprechenden Ausgangssignals; und

- eine Verarbeitungseinrichtung (5) zum Verarbeiten des Ausgangssignals der Strahlungsmeßeinrichtung und zum Erzeugen eines Ausgangssignals, welches einer physikalischen Eigenschaft des Fluids entspricht,

dadurch gekennzeichnet,

daß jeder der Rohrabschnitte (2) einen Flansch (13) aufweist, der an demjenigen Ende ausgebildet ist, welches an das Strahlungsdurchgangsfenster (7) angrenzt,

und daß das rohrförmige Schutzteil (9) an jedem seiner Enden einen Flansch (11) aufweist, wobei jeder der Flansche des rohrförmigen Schutzteiles in einer planen Fläche-an-Fläche-Anordnung anliegt an und verbunden ist mit dem Flansch des angrenzenden Rohrabschnitts.

2. Analysiervorrichtung zum Analysieren eines Fluides innerhalb eines Rohres (2) unter Verwendung von Strahlung, umfassend

- ein Strahlungsdurchgangsfenster (7), das koaxial zwischen zwei Abschnitten des Rohres angeordnet ist, wobei das Strahlungsdurchgangsfenster ein Berylliumrohr (8), das koaxial bezüglich der Rohrabschnitte angeordnet ist, und ein rohrförmiges Schutzteil (9) aufweist, das eng um das Berylliumrohr paßt und eine größere Steifigkeit als das Berylliumrohr hat, wobei das Schutzteil zwei diametral gegenüberliegende Durchgangslöcher (10) besitzt, die sich von der Außenoberfläche des Berylliumrohres zu der Außenoberfläche des rohrförmigen Schutzteiles erstrecken;
- eine Strahlungseinrichtung (1) zum Erzeugen von Strahlung, die durch das eine der Durchgangslöcher in das Rohr eintritt, durch das Fluid hindurchgeht und durch das andere der Durchgangslöcher austritt;
- eine Strahlungsmeßeinrichtung (4) zum Messen der Intensität der Strahlung aus der Strahlungseinrichtung, die aus dem anderen der Durchgangslöcher austritt, und zum Erzeugen eines entsprechenden Ausgangssignals; und
- eine Verarbeitungseinrichtung (5) zum Verarbeiten des Ausgangssignals der Strahlungsmeßeinrichtung und zum Erzeugen eines Ausgangssignals, welches einer physikalischen Eigenschaft des Fluids entspricht,

gekennzeichnet durch eine Dichtungseinrichtung (12) um eine leckdichte Verbindung zwischen dem Strahlungsdurchgangsfenster und den Rohrabschnitten zu bilden, wobei die Dichtungseinrichtung (12) zwei O-Ringe (12) aufweist, von denen jeder zwischen der einen der stirnseitigen Oberflächen des Berylliumrohres und der stirnseitigen Oberfläche des angrenzenden Rohrabschnittes angeordnet ist.

3. Analysiervorrichtung nach Anspruch 2,
wobei das Berylliumrohr kürzer als das rohrförmige Schutzteil ist, beide Enden des Berylliumrohres innerhalb der Enden des rohrförmigen Schutzteiles liegen und die O-Ringe innerhalb der Enden des rohrförmigen Schutzteiles zwischen den Enden des Berylliumrohres und den Enden der angrenzenden Rohrabschnitte angeordnet sind.

4. Analysiervorrichtung nach Anspruch 1, Anspruch 2 oder Anspruch 3,
wobei eine Beschichtung (24) aus einer Substanz, die aus einer Keramik und Diamant gewählt ist, auf der Innenoberfläche des Berylliumrohres ausgebildet ist.

5. Analysiervorrichtung nach einem der vorherigen Ansprüche,
wobei das rohrförmige Schutzteil (9) aus einem Material besteht, das aus Eisen und Stahl gewählt ist.

6. Analysiervorrichtung nach Anspruch 4,
wobei die Keramik eine Substanz ist, die leichte Atome aufweist.

7. Analysiervorrichtung nach Anspruch 6,
wobei die Keramik aus Aluminiumoxid, Siliciumcarbid, MgO und Siliciumdioxid gewählt ist.

8. Analysiervorrichtung nach einem der vorherigen Ansprüche,
wobei die Strahlungseinrichtung eine Quelle von Gammastrahlen ist.

9. Analysiervorrichtung nach einem der Ansprüche 1 bis 7,
wobei die Strahlungseinrichtung eine Quelle von Röntgenstrahlen ist.

**Revendications**

1. Analyseur pour analyser un liquide dans un tuyau (2) en utilisant un rayonnement, comprenant :
une fenêtre de transmission du rayonnement qui est disposée coaxialement entre deux sections dudit tuyau, ladite fenêtre de transmission du rayonnement comprenant un tube en béryllium (8), qui est coaxial par rapport auxdites sections de tuyau et un protecteur tubulaire (9) qui s'adapte de manière très serrée autour dudit tube en béryllium et a une plus grande raideur que le tube en béryllium, ledit protecteur tubulaire ayant deux trous diamétralement opposés (10) qui y sont formés, qui s'étendent de la surface externe dudit tube en béryllium jusqu'à la surface externe dudit protecteur tubulaire :
un moyen de rayonnement (1) qui produit un rayonnement qui entre dans ledit tuyau à travers l'un desdits trous, qui traverse ledit liquide et qui sort par l'autre desdits trous;

un moyen de détection du rayonnement (4) pour détecter l'intensité du rayonnement dudit moyen de rayonnement qui sort dudit autre desdits trous et produire un signal correspondant de sortie; et

un moyen de traitement (5) pour le traitement du signal à la sortie dudit moyen de détection du rayonnement et pour produire un signal de sortie correspondant à une propriété physique dudit liquide;

caractérisé en ce que

chacune desdites sections de tuyau (2) a une bride (11) formée à chaque extrémité, qui est adjacente à ladite fenêtre de transmission du rayonnement; et

ledit protecteur tubulaire (9) a une bride (11) formée à chaque extrémité, chacune desdites brides dudit protecteur tubulaire étant en aboutement face à face en plan et étant connectée à la bride de la section adjacente du tuyau.

2. Analyseur pour analyser un liquide dans un tuyau (2) en utilisant un rayonnement, comprenant :

une fenêtre de transmission du rayonnement qui est disposée coaxialement entre deux sections dudit tuyau, ladite fenêtre de tranmsission du rayonnement comprenant un tube en béryllium (8) qui est coaxial par rapport auxdites sections de tuyau et un protecteur tubulaire (9) qui s'adapte de manière très serrée autour dudit tube en béryllium et a une plus grande raideur que le tube en béryllium, ledit protecteur tubulaire ayant deux trous diamétralement opposés (10) qui y sont formés, qui s'étendent de la surface externe dudit tube en béryllium jusqu'à la surface externe dudit protecteur tubulaire;

un moyen de rayonnement (1) qui produit un rayonnement qui entre dans ledit tuyau à travers l'un desdits trous, qui traverse ledit liquide et qui sort par l'autre desdits trous;

un moyen de détection du rayonnement (4) pour détecter l'intensité du rayonnement dudit moyen de rayonnement qui sort dudit autre desdits trous et produire un signal correspondant de sortie; et

un moyen de traitement (5) pour le traitement du signal à la sortie dudit moyen de détection du rayonnement et pour produire un signal de sortie correspondant à une propriété physique dudit liquide;

caractérisé par

un moyen d'étanchéité (12) pour former un joint étanche aux fuites entre ladite fenêtre de transmission du rayonnement et lesdites sections de tuyau, ledit moyen d'étanchéité (12) comprenant deux joints toriques (12), dont chacun est disposé entre l'une des surfaces extrêmes dudit tube en béryllium et la surface extrême de la section adjacente de tuyau.

3. Analyseur selon la revendication 2, où ledit tube en béryllium est plus court que ledit protecteur tubulaire, les deux extrémités dudit tube en béryllium se trouvent à l'intérieur des extrémités dudit protecteur tubulaire et lesdits joints toriques sont disposés à l'intérieur des extrémités dudit protecteur tubulaire entre les extrémités dudit tube en béryllium et les extrémités des sections adjacentes du tuyau.

4. Analyseur selon la revendication 1, la revendication 2 ou la revendication 3, où un revêtement (24) d'une structure choisie parmi une céramique et un diamant, est formé sur la surface interne dudit tube en béryllium.

5. Analyseur selon l'une quelconque des revendications précédentes, où ledit protecteur tubulaire (9) est fait d'un matériau choisi parmi le fer et l'acier.

6. Analyseur selon la revendication 4, où ladite céramique est une substance comprenant des atomes légers.

7. Analyseur selon la revendication 6, où ladite céramique est choisie parmi l'alumine, le carbure de silicium, MgO et le bioxyde de silicium.

8. Analyseur selon l'une quelconque des revendications précédentes, où ledit moyen de rayonnement est une source de rayons gamma.

9. Analyseur selon l'une quelconque des revendications 1 à 7, où ledit moyen de rayonnement est une source de rayons X.

EP 0 269 432 B2

# FIG. 1
## PRIOR ART

9

# FIG. 2

RADIATION
DETECTOR 4

SIGNAL
PROCESSOR 5

# FIG. 3

RADIATION DETECTOR — 4

SIGNAL PROCESSOR — 5

# FIG. 4